# EUROPÄISCHE PATENTSCHRIFT

(11) **EP 2 732 540 B1**
(45) Veröffentlichungstag und Bekanntmachung des Hinweises auf die Patenterteilung: **29.07.2015**
(21) Anmeldenummer: 12743362.1
(22) Anmeldetag: 31.05.2012
(51) Int. Cl.: H02K 53/00, H02K 49/10, H02K 33/00

(54) **MOTOR**
MOTOR
MOTEUR

(30) Priorität: 13.07.2011 DE 102011107221
(43) Veröffentlichungstag der Anmeldung: 21.05.2014
(73) Patentinhaber: Isele, Norbert, 79365 Rheinhausen (DE)
(72) Erfinder: Isele, Norbert, 79365 Rheinhausen (DE)
(74) Vertreter: Goy, Wolfgang
(86) Internationale Anmeldenummer: PCT/DE2012/000575
(87) Internationale Veröffentlichungsnummer: WO 2013/007228

(56) Entgegenhaltungen:
- US-A1- 2007 267 921
- US-A1- 2009 051 235

## Beschreibung

Die Erfindung betrifft einen Motor.

Motoren sind in den vielfältigsten Ausführungsformen bekannt. Grundsätzlich handelt es sich bei einem Motor um eine Vorrichtung, welche mechanische Arbeit verrichtet, indem sie verschiedene Energieformen in Bewegungsenergie umwandelt.

Aus der US 2007/0 267 921 A1 ist ein Motor bekannt, der im Wesentlichen aus zwei Permanentmagneten aufgebaut ist. Einer der Permanentmagneten ist fest montiert, der andere darüber beweglich angeordnet. In dem Zwischenspalt zwischen den beiden Permanentmagneten ist eine ferromagnetische Platte angeordnet, die in den Zwischenspalt heraus und wieder hinein bewegt werden kann. Der obere bewegliche Permanentmagnet kann innerhalb eines Zylinders verschoben werden und ist über eine Pleuelstange mit einer Kurbelwelle verbunden.

Ferner ist aus der US 2009/0 051 235 A1 ein Motor bekannt, der einen äußeren feststehenden Kranz von abwechselnd gepolten Permanentmagneten aufweist. Darin angeordnet ist ein Rotor vorgesehen, der ebenfalls aus einem Ring von abwechselnd gepolten Magneten aufgebaut ist. Ferner liegen in dem Zwischenspalt zwischen Rotor und äußerem Kranz Abschirmungen aus µ-Metall vor.

Der Erfindung liegt die Aufgabe zugrunde, einen neuartigen Motor zu schaffen.

Die technische Lösung ist gekennzeichnet durch die Merkmale des Anspruchs 1.

Dadurch ist ein neuartiger Motor geschaffen, welcher die Abstoßkraft zweier Permanentmagnete ausnutzt. Das Grundprinzip besteht dabei darin, dass der erste Permanentmagnet fest angeordnet ist und als Stator dient. Dieser erste Permanentmagnet behält immer seine Lage bei. Der zweite Permanentmagnet übernimmt die Funktion eines Kolbens und kann sich beispielsweise in einem Kolbenschacht von dem ersten Permanentmagneten weg und wieder zurück bewegen. Wesentlich dabei ist, dass die beiden Permanentmagnete derart angeordnet und montiert sind, dass die gleiche Polung gegenüber liegt. Dadurch befinden sich die beiden Permanentmagnete in ihrer abstoßenden Position.

Ein weiteres Element des Motors ist eine magnetische Abschirmplatte in Form eines quer beweglichen Schiebers. Diese Abschirmplatte ist somit vorzugsweise rechtwinklig, aber auch schräg zwischen den beiden Permanentmagneten geführt. Diese magnetische Abschirmplatte bewirkt, dass die beiden Permanentmagnete auf eine sehr kleine Distanz zusammengebracht werden können, wenn sich die Abschirmplatte zwischen den beiden Permanentmagneten befindet. Diese verschiebbare magnetische Abschirmplatte bildel dabei die Grundlage für die Funktion des erfindungsgemäßen Permanentmagnetmotors. Die Abschirmplatte besteht aus einem Material, welches die Magnetfelder derart bezüglich des jeweils anderen Permanentmagneten abschirmt und neutralisiert, dass für den Fall, dass sich die Abschirmplatte zwischen den beiden Permanentmagneten befindet, keine oder nur eine geringe Abstoßungkraft zwischen den beiden Permanentmagneten auftritt, auf jeden Fall eine geringere Abstoßungskraft, wenn sich die Abschirmplatte nicht zwischen den beiden Permanentmagneten befindet.

Der zweite Permanentmagnet kann in seiner Funktion als Kolben mit kleiner, Kraft zu einem minimalen Abstand zu dem ersten Permanentmagneten gebracht werden, und zwar dann, wenn sich die magnetische Abschirmplatte zwischen den beiden Permanentmagneten befindet. Hierzu reicht eine auf den zweiten Permanentmagneten wirkende Rückstellkraft. Bei Erreichen dieser minimalen Distanz zwischen den beiden Permanentmagneten wird der zweite Permanentmagnet in dieser Position fixiert.

Dabei wird der erste Permanentmagnet in seiner unteren Position so lange fixiert ist, bis die Abschirmplatte herausgezogen ist. Dies bedeutet, dass erst dann der obere, zweite Permanentmagnet nach oben schnellt, wenn die Abschirmplatte vollständig herausgezogen ist. Selbstverständlich ist es auch denkbar, dass der untere Permanentmagnet nicht fixiert ist. Die Folge davon ist, dass durch das allmähliche Herausziehen der Abschirmplatte der obere, zweite Permanentmagnet sich entsprechend allmählich nach oben bewegt.

Die magnetische Abschirmplatte ist weiterhin derart konstruiert und gelagert, dass das Herausbewegen aus dem Magnetfeld nur eine geringe Kraft bzw. Energie benötigt. Dabei wird die Abschirmplatte so weit von den beiden Permanentmagneten entfernt, dass diese das Magnetfeld nicht mehr beeinflußt oder nur noch in geringem Maße beeinflußt. Es wirkt dann die volle magnetische Abstoßungskraft zwischen den beiden Permanentmagneten. Diese magnetische Abstoßungskraft wird in kinetische Energie umgesetzt und kann genutzt werden. Die Nutzung kann dabei in vielfältiger Weise erfolgen.

Dieser Vorgang kann in Abhängigkeit von der Lebensdauer bzw. der Energiebereitstellung der Permanentmagnete beliebig oft wiederholt werden.

Grundsätzlich können die beiden Permanentmagnete jede beliebige relative Position und Ausrichtung zueinander einnehmen, also bezüglich der Vertikalen schräg oder auch horizontal. Die Weiterbildung gemäß Anspruch 2 schlägt vor, dass der zweite Permanentmagnet vertikal oberhalb des ersten Permanentmagneten angeordnet und in vertikaler Richtung beweglich ist. Hier wird als Rückstellkraft für den zweiten Permanentmagneten nach dem Hineinschieben der magnetischen Abschirmplalte zwischen die beiden Permanentmagnete die Gravitationskraft ausgenutzt.

Gemäß der Weiterbildung in Anspruch 3 handelt es sich bei der Abschirmplatte um ein ferromagnetisches Material hoher Permeabilität und geringer Remanenz. Diese weichmagnetischen Werkstoffe wirken dem Durchtritt von Magnetfeldern entgegen.

Vorzugsweise besteht gemäß der Weiterbildung in Anspruch 4 die Abschirmplatte aus µ-Metall. Bei diesem Werkstoff handelt es sich um eine weich magnetische Nickel-EisenLegierung hoher magnetischer Permeabilität, die üblicherweise zur Abschirmung niederfrequenter Magnetfelder sowie konstanter Magnetfelder eingesetzt wird. Die hohe Permeabilität bewirkt, dass sich der magnetische Fluß niederfrequenter Magnetfelder im Material konzentriert. Dieser Effekt führt zu einer beachtlichen Dämpfung.

Eine bevorzugte Weiterbildung schlägt gemäß Anspruch 5 vor, dass die magnetische Abschirmplatte derart ausgebildet ist, dass sich während Ihres Herausziehens die Abschirmung der Magnetfelder der beiden Permanentmagnete nicht schlagartig, sondern allmählich verringert. Die Grundidee besteht somit darin, dass nicht wie bei einer Abschirmplatte, welche über ihre gesamte Länge identisch ausgebildet ist, die Abschirmung abrupt in eine NichtAbschirmung übergeht, sondern dass vielmehr beispielsweise bereits vom Endbereich der Abschirmplatte ab sich die Abschirmungseigenschaft dieser Abschirmplatte allmählich verringert. Der Vorteil besteht darin, dass aufgrund dieser sletigen Verringerung der Magnetfeldabschirmung die Abschirmplatte mit einer vergleichsweise geringen Kraft herausgezogen werden kann.

Gemäß der Weiterbildung in Anspruch 6 weist die magnetische Abschirmplatte zum Ende hin immer weniger Elementarmagnete auf. Dies kann zum einen durch einen speziellen Aufbau der Legierung der Abschirmplatte erreicht werden, zum anderen bei einer fest vorgegebenen Legierung durch die Gestaltungsform der Abschirmplatte.

Eine technische Realisierung schlägt gemäß Anspruch 7 vor, dass sich die magnetische Abschirmplatte zum Ende hinsichtlich ihrer Dicke verringert und/oder dass die magnetische Abschirmplatte zum Ende hin Durchbrechungen aufweist. Beide Male ist die Wirkung so, dass zum Ende hin weniger Elementarmagnete vorliegen, welche die Magnetfelder der beiderseitigen Permanentmagnete gegeneinander abschirmen können. Die Gestaltung der Durchbrechungen kann dabei beliebig sein. Beispielsweise ist es denkbar, dass die Abschirmplatte wenigstens einen, zum Ende hin gerichteten dreiecksförmigen Zahn aufweist. Auch eine kammartige Ausbildung der Abschirmplatte zum Ende hin ist denkbar, ebenso andere Formgebungen, welche den gewünschten Zweck erzielen.

Ein Ausführungsbeispiel eines erfindungsgemäßen Motors wird nachfolgend anhand der Zeichnungen beschrieben. In diesen zeigt:
- Fig. 1: die Grundanordnung des Motors;
- Fig. 2 bis Fig. 5: die verschiedenen Ablaufschritte beim Betätigen des Motors;
- Fig. 6a: eine Seitenansicht einer alternativen Ausführungsform der Abschirmplatte;
- Fig. 6b: eine Draufsicht auf die Abschirmplatte in Fig. 6a;
- Fig. 7a: die Ausgangsposition der Abschirmplatte in Fig. 6a;
- Fig. 7b: die Endposition der Abschirmplatte in Fig. 6a.

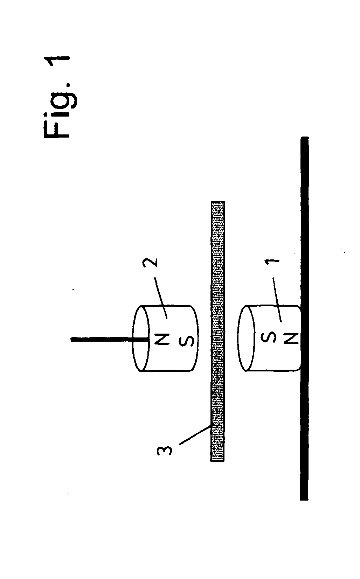

Fig. 1 zeigt den Permanentmagnetmotor in seinem rein schematischen Grundaufbau sowie in seiner Ausgangsposition.

Der Motor besitzt einen unteren, ersten Permanentmagnet 1. Dieser ist fest angeordnet und behält immer seine Lage bei.

Mit Abstand oberhalb des ersten Permanentmagneten 1 befindet sich ein zweiter Permanentmagnet 2. Im Gegensatz zum unteren, ersten Permanentmagneten 1 ist dieser zweite Permanentmagnet 2 vertikal beweglich angeordnet.

Wesentlich bei diesen beiden Permanentmagneten 1, 2 ist, dass die beiden gleichnamigen Pole einander gegenüberliegen und somit eine abstoßende Position einnehmen. In dem dargestellten Ausführungsbeispiel liegen die beiden Süd-Pole gegenüber.

Im Bereich zwischen den beiden Permanentmagneten 1, 2 befindet sich eine magnetische Abschirmplatte 3 insbesondere aus einem ferromagnetischen Material, insbesondere µ-Metall. Diese magnetische Abschirmplatte 3 hat den Effekt, dass sie magnetische Felder vollkommen oder zum größten Teil abschirmt. Diese magnetische Abschirmplatte 3 ist horizontal verschiebbar.

Die Funktionsweise ist wie folgt:
Die Ausgangssituation ist in Fig. 1 dargestellt. Die beiden Permanentmagnete 1, 2 befinden sich in einem geringen Abstand zueinander. Der obere Permanentmagnet 2 ist dabei fixiert. Zwischen den beiden Permanentmagneten 1, 2 befindet sich die magnetische Abschirmplatte 3. Diese bewirkt, dass die beiderseitigen Magnetfelder der beiden Permanentmagnete 1, 2 gegeneinander weitestgehend abgeschirmt werden, so dass keine oder allenfalls nur eine geringe Abstoßungskraft zwischen den beiden Permanentmagneten 1, 2 wirkt.

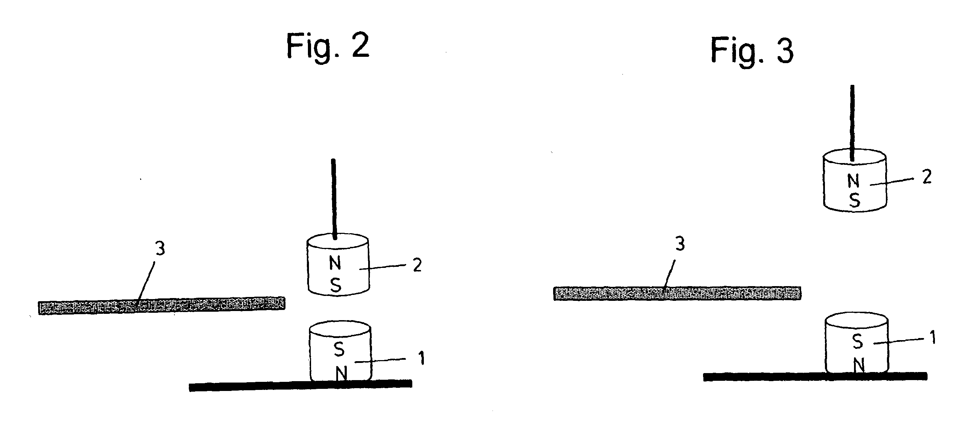

Ausgehend von dieser Ausgangsstellung in Fig. 1 wird nunmehr die magnetische Abschirmplatte 3 seitlich herausgezogen, so dass sie sich nicht mehr zwischen den beiden Permanentmagneten 1, 2 befindet. Diese Situation ist in Fig. 2 dargestellt. In dieser Position ist der obere Permanentmagnet 2 nach wie vor fixiert, so dass die zwischen den beiden Permanentmagneten 1, 2 wirkende Abstoßungskraft noch keine unmittelbare Wirkung zeigt.

Wird dann - wie in Fig. 3 dargestellt - die Fixierung des oberen Permanentmagneten 2 gelöst, wirkt die Abstoßungskraft voll zwischen den beiden Permanentmagneten 1, 2. Sie bewirkt, dass der obere Permanentmagnet 2 in der Art eines Kolbens sich nach oben bewegt. Die große Abstoßungskraft entwickelt eine entsprechende hohe kinetische Energie auf den oberen Permanentmagneten 2. Diese kinetische Energie kann genutzt werden.

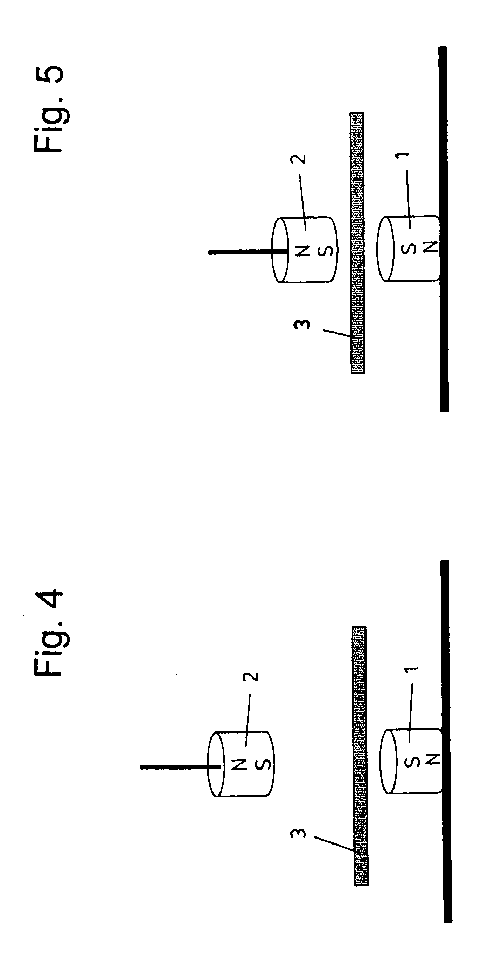

In Abhängigkeit von der Reichweite der Magnetfelder sowie der Impulskraft erreicht der zweite, obere Permanentmagnet 2 eine maximale obere Position. In dieser Position wird dann die magnetische Abschirmplatte 3 wieder zwischen die beiden Permanentmagnete 1, 2 geschoben, wie dies in Fig. 4 dargestellt ist. Dadurch wird die Abstoßungskraft zwischen den beiden Permanentmagneten 1, 2 wieder aufgehoben.

Die Folge davon ist, dass sich der zweite, obere Permanentmagnet 2 aufgrund der Gravitationskraft wieder nach unten bewegt. In dieser unteren Position mit einem geringen Abstand zwischen den beiden Permanentmagneten 1, 2 wird der obere, zweite Permanentmagnet 2 wieder fixiert. Die somit erreichte Position, wie sie in Fig. 5 dargestellt ist, entspricht der Ausgangsposition, wie sie in Fig. 1 dargestellt ist. Dies bedeutet, dass der gesamte Zyklus wieder von vorne beginnen kann.

Das dargestellte und beschriebene Ausführungsbeispiel eines Permanentmagnetmotors zeigt, dass der zweite Permanentmagnet 2 vertikal oberhalb des ersten Permanentmagnet 1 angeordnet ist. Es ist gleichermaßen aber auch denkbar, dass die Verbindungslinie der beiden Permanentmagnete 1, 2 schräg oder horizontal verläuft. Dies schließt auch ein, dass der feststehende erste Permanentmagnet 1 oben und der bewegliche zweite Permanentmagnet 2 unten ist.

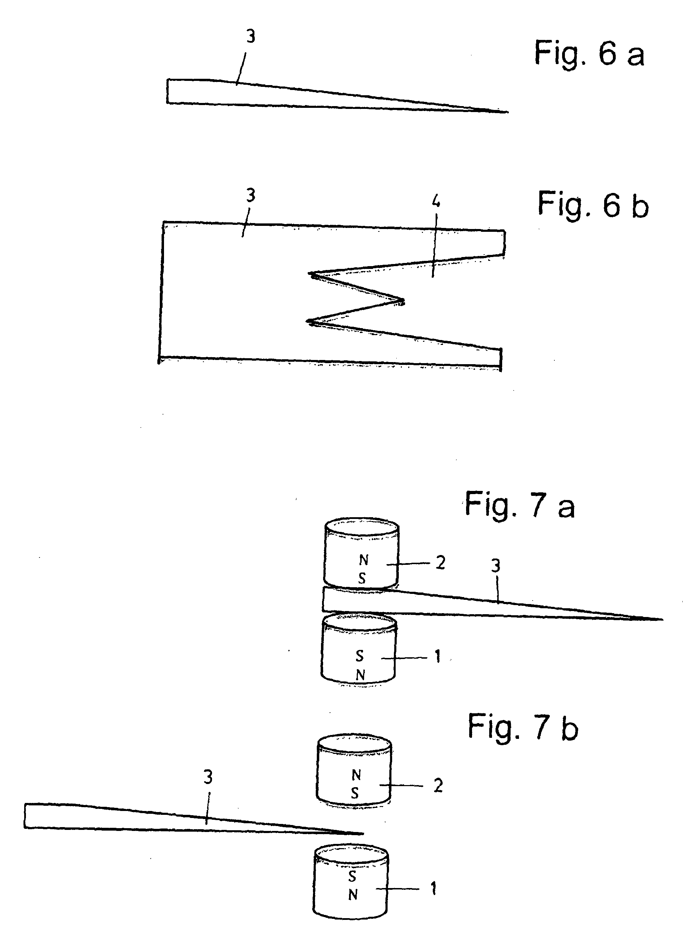

Fig. 6a und 6b zeigt eine alternative Ausführungsform der Abschirmplatte. Wie in Flg. 6a erkennbar ist, verjüngt sich die Abschirmplatte zum hinteren Ende hin hinsichtlich ihrer Dicke, d. h. sie läuft keilförmig zu. In der Draufsicht gemäß Fig. 6b ist weiterhin erkennbar, dass die magnetische Abschirmplatte 3 im allgemeinsten Sinne zum Ende hin eine (oder mehrere) Durchbrechungen 4 aufweist, welche sich zum hinteren Ende hin stetig vergrößert. Die Konturlinie dieser Durchbrechung 4 ist im Ausführungsbeispiel dabei im allgemeinsten Sinne M-förmig ausgebildet. So weist diese Kontur zwei seitliche Schenkel mit sich verringernder Breite auf. In der Mitte dazwischen befindet sich ein zum Ende hin gerichtetes Dreiecksprofil.

Die Funktionsweise ist wie folgt:
Wie in Fig. 7a dargestellt, befindet sich die magnetische Abschirmplatte 3 mit ihrem dickeren hinteren Ende in der Ausgangsposition zwischen den beiden Permanentmagneten 1, 2. Auch hier wird die Abschirmplatte 3 allmählich zwischen den beiden Permanentmagneten 1, 2 herausgezogen, bis das in der Zeichnung rechte Ende erreicht ist (Fig. 7b).

Dies bedeutet, dass sich in der Ausgangsposition der Abschnitt der magnetischen Abschirmplatte 3 mit hoher Materialstärke und vielen Elementarmagneten zwischen den beiden Permanentmagneten 1, 2 befindet. Dadurch werden die Magnetfelder der beiden Permanentmagnete 1, 2 maximal abgeschirmt. Eine Abstoßung zwischen den beiden Permanentmagneten 1, 2 findet aufgrund der hohen Abschirmung der magnetischen Feldlinien nicht oder nur minimal statt.

Wenn sich dann die Abschirmplatte 3 an ihrem anderen Ende mit der Durchbrechung 4 befindet, hat die Abschirmplatte 3 nur noch einen unwesentlichen Einfluß auf die Abstoßungskraft der Permanentmagnete 1, 2. Die Abschirmplatte 3 ist dabei derart konstruiert, dass die Materialstärke kontinuierlich abnimmt und die magnetischen Feldlinien während dem Herausziehen an der Abschirmplatte abgleiten können. Diese kontinuierliche Abnahme der Materialstärke und das Abgleiten der magnetischen Feldlinien ist die Voraussetzung dafür, dass die Abschirmplatte 3 mit kleiner und gleichbleibender Kraft herausgezogen werden kann. Die Abschirmplatte ist dabei vorzugsweise in Gleit- oder Rollenlagern gelagert.

Die Formgebung der Abschirmplatte 3 in dem Ausführungsbeispiel ist rein beispielhaft. Vielerlei Arten der technischen Realisierung sind möglich.

Insgesamt sind die magnetischen Feldlinien derart geführt, dass beim Herausziehen der Abschirmplatte 3 keine großen horizontalen Zugkräfte entstehen. Hohe Zugkräfte in horizontaler Richtung entstehen bei Übergängen der Abschirmplatte 3 nur mit großer Materialstärke und bei einem abrupten Übergang oder Ende der Abschirmplatte 3. Deshalb sind alle direkt über den Oberflächen der Permanentmagnete 1, 2 liegenden Flächen der Abschirmplatte 3 derart geformt, dass beim Herausziehen keine Übergänge mit großer Materialstärke der Abschirmplatte 3 vorhanden sind. Vertikal gerichtete Anzugskräfte werden dabei durch die Lagerung der Abschirmplatte 3 aufgenommen.

Die dargestellte Abschirmplatte 3 kann auch mit anderer Formgebung oder Legierung bis hin zu elektronischen Halbleitern realisiert werden.

### BEZUGSZEICHENLISTE

- 1: Permanentmagnet
- 2: Permanentmagnet
- 3: magnetische Abschirmplatte

## Patentansprüche

1. Motor
mit einem ersten, feststehenden Permanentmagnet (1),
mit einem zweiten Permanentmagnet (2),
wobei der zweite Permanentmagnet (2) gegenüber dem ersten Permanentmagneten (1) angeordnet und von diesem weg und auf diesen zu beweglich ist und
wobei die Pole der beiden Permanentmagnete (1, 2) abstoßend entgegengesetzt ausgerichtet sind, sowie
mit einer magnetischen Abschirmplatte (3) aus einem Magnetfelder abschirmenden Material im Bereich zwischen den beiden Permanentmagneten (1, 2),
wobei zum Betätigen des Motors
zunächst die magnetische Abschirmplatte (3) sich zwischen den beiden Permanentmagneten (1, 2) befindet und deren beiderseitigen Magnetfelder voneinander abschirmt, anschließend die magnetische Abschirmplatte aus dem Bereich zwischen den beiden Permanentmagneten (1, 2) derart herausbewegt wird, dass sich der zweite Permanentmagnet (2) aufgrund der magnetischen Abstoßungskraft von dem ersten Permanentmagneten (1) weg bewegt, und
schließlich die magnetische Abschirmplatte (3) wieder zwischen die beiden Permanentmagnete (1, 2) derart hineinbewegt wird, dass die beiderseitigen Magnetfelder wieder voneinander abgeschirmt sind und dass in der Konsequenz hiervon der zweite Permanentmagnet (2) sich aufgrund einer Rückstellkraft wieder in seine Ausgangsposition zurückbewegt,
**dadurch gekennzeichnet,**
**dass** der zweite Permanentmagnet (2) in seiner Ausgangsposition so lange fixiert wird, bis die magnetische Abschirmplatte (3) vollständig herausgezogen ist.

2. Motor nach dem vorhergehenden Anspruch,
**dadurch gekennzeichnet,**
**dass** der zweite Permanentmagnet (2) vertikal oberhalb des ersten Permanentmagneten (1) angeordnet und in vertikaler Richtung beweglich ist,
**dass** sich der zweite Permanentmagnet (2) nach dem Herausbewegen der magnetische Abschirmplatte (3) aufgrund der magnetischen Abstoßungskraft nach oben bewegt und dass nach dem Hineinbewegen der magnetische Abschirmplatte (3) zwischen die beiden Permanentmagnete (1, 2) der zweite Permanentmagnet (2) sich aufgrund der Gravitationskraft wieder nach unten in seine Ausgangsposition bewegt.

3. Motor nach einem der vorhergehenden Ansprüche,
**dadurch gekennzeichnet,**
**dass** die magnetische Abschirmplatte (3) aus einem ferromagnetischen Material besteht.

4. Motor nach einem der vorhergehenden Ansprüche,
**dadurch gekennzeichnet,**
**dass** die magnetische Abschirmplatte (3) aus µ-Metall besteht.

5. Motor nach einem der vorhergehenden Ansprüche,
**dadurch gekennzeichnet,**
**dass** die magnetische Abschirmplatte (3) derart ausgebildet ist, dass sich während ihres Herausziehens die Abschirmung der Magnetfelder der beiden Permanentmagneten (1, 2) nur allmählich verringert.

6. Motor nach Anspruch 5,
**dadurch gekennzeichnet,**
**dass** die magnetische Abschirmplatte (3) zum Ende hin allmählich immer weniger Elementarmagnete aufweist.

7. Motor nach Anspruch 5 oder 6,
**dadurch gekennzeichnet,**
**dass** sich die magnetische Abschirmplatte (3) zum Ende hin hinsichtlich ihrer Dicke verringert und/oder
**dass** die magnetische Abschirmplatte (3) zum Ende hin Durchbrechungen (4) aufweist.

## Claims

1. A motor
comprising a first, stationary permanent magnet (1), comprising a second permanent magnet (2),
wherein the second permanent magnet (2) is arranged opposite the first permanent magnet (1) and can be moved away from and towards the latter and
wherein the poles of the two permanent magnets (1, 2) are oriented so as to repel each other contrarily, as well as comprising a magnetic shielding plate (3) of a material,
which shields magnetic fields, in the area between the two permanent magnets (1, 2),
wherein, for activating the motor,
the magnetic shielding plate (3) is initially located between the two permanent magnets (1, 2) and shields the magnetic fields thereof on both sides from one another, the magnetic shielding plate is subsequently moved out of the area between the two permanent magnets (1, 2) such that, due to the magnetic force of repulsion, the second permanent magnet (2) moves away from the first permanent magnet (1), and
the magnetic shielding plate (3) is finally moved between the two permanent magnets (1, 2) again such that the magnetic fields on both sides are shielded from one another again and that, as a result of this, the second permanent magnet (2) moves back into its initial position again due to a reset force,
**characterised in**
**that** the second permanent magnet (2) is fixed in its initial position until the magnetic shielding plate (3) is pulled out completely.

2. The motor according to the preceding claim,
**characterised in**
**that** the second permanent magnet (2) is arranged vertically above the first permanent magnet (1) and is movable in vertical direction,
**that**, due to the magnetic force of repulsion, the second permanent magnet (2) moves upwards after having moved out the magnetic shielding plate (3) and that, due to the force of gravity, the second permanent magnet (2) moves back downwards again into its initial position after the magnetic shielding plate (3) has moved between the two permanent magnets (1, 2).

3. The motor according to any one of the preceding claims,
**characterised in**
**that** the magnetic shielding plate (3) consists of a ferromagnetic material.

4. The motor according to any one of the preceding claims,
**characterised in**
**that** the magnetic shielding plate (3) consists of µ-metal.

5. The motor according to any one of the preceding claims,
**characterised in**
**that** the magnetic shielding plate (3) is embodied such that, while the latter is pulled out, the shielding of the magnetic fields of the two permanent magnets (1, 2) decreases only gradually.

6. The motor according to claim 5,
**characterised in**
**that**, towards the end, the magnetic shielding plate (3) encompasses gradually fewer and fewer molecular magnets.

7. The motor according to claim 5 or 6,
**characterised in**
**that** towards the end, the magnetic shielding plate (3) decreases with regard to its thickness and/or
**that**, towards the end, the magnetic shielding plate (3) encompasses through holes (4).

## Revendications

1. Moteur,
comprenant un premier aimant permanent fixe (1), comprenant un second aimant permanent (2),
dans lequel le second aimant permanent (2) est disposé face au premier aimant permanent fixe (1) et peut s'éloigner et s'approcher de celui-ci et
dans lequel les pôles des deux aimants permanents (1, 2) sont dirigés de façon opposée en se repoussant, ainsi qu'une plaque de blindage magnétique (3) en matériau de blindage contre les champs magnétiques dans la partie entre les deux aimants permanents (1, 2),
sachant que pour actionner le moteur
la plaque de blindage magnétique (3) se trouve d'abord entre les deux aimants permanents (1, 2) et blinde l'un contre l'autre leurs champs magnétiques bilatéraux,
ensuite, la plaque de blindage magnétique est sortie de la partie entre les deux aimants permanents (1, 2) de telle sorte que le second aimant permanent (2) s'éloigne du premier aimant permanent (1) du fait de la force de répulsion magnétique, et
enfin, la plaque de blindage magnétique (3) est à nouveau rentrée entre les deux aimants permanents (1, 2) de telle sorte que les champs magnétiques bilatéraux sont à nouveau blindés l'un contre l'autre et que par conséquent, le second aimant permanent (2) retourne dans sa position de départ du fait d'une force de rappel,
**caractérisé en ce que**
le second aimant permanent (2) est maintenu dans sa position de départ jusqu'à ce que la plaque de blindage magnétique (3) soit complètement sortie.

2. Moteur selon la revendication 1,
**caractérisé en ce que**
le second aimant permanent (2) est disposé verticalement au-dessus du premier aimant permanent (1) et mobile verticalement,
que le second aimant permanent (2) se déplace vers le haut du fait de la force de répulsion magnétique après la sortie de la plaque de blindage magnétique (3) et qu'après la rentrée de la plaque de blindage magnétique (3) entre les deux aimants permanents (1, 2), le second aimant permanent (2) retourne vers le bas dans sa position de départ du fait de la force de gravitation.

3. Moteur selon l'une des revendications précédentes,
**caractérisé en ce que**
la plaque de blindage magnétique (3) est en matériau ferromagnétique.

4. Moteur selon l'une des revendications précédentes,
**caractérisé en ce que**
la plaque de blindage magnétique (3) est en métal µ.

5. Moteur selon l'une des revendications précédentes,
**caractérisé en ce que**
la plaque de blindage magnétique (3) est ainsi conçue que pendant sa sortie, le blindage des champs magnétiques des deux aimants permanents (1, 2) ne réduit que progressivement.

6. Moteur selon la revendication 5,
**caractérisé en ce que**
la plaque de blindage magnétique (3) présente progressivement de moins en moins d'aimants élémentaires en direction de l'extrémité.

7. Moteur selon la revendication 5 ou 6,
**caractérisé en ce que**
la plaque de blindage magnétique (3) a son épaisseur qui réduit en direction de l'extrémité et/ou que la plaque de blindage magnétique (3) présente des percées (4) en direction de l'extrémité.
